# EUROPEAN PATENT APPLICATION

(11) **EP 3 933 189 A1**
(43) Date of publication of application: **05.01.2022**
(21) Application number: 20210916.1
(22) Date of filing: 01.12.2020
(51) Int. Cl.: F02M 35/10

(54) **INTAKE MANIFOLD AND ENGINE INCLUDING THE SAME**

(30) Priority: 01.07.2020 KR 20200080780
(71) Applicant: Hyundai Motor Company, Seoul 137-938 (KR); Kia Corporation, Seocho-gu Seoul 06797 (KR)
(72) Inventor: WOO, Soo Hyung, 18280 Hwaseong-si, Gyeonggi-do (KR); SUNG, Kyung Sub, 18280 Hwaseong-si, Gyeonggi-do (KR); KIM, Won Gyu, 18280 Hwaseong-si, Gyeonggi-do (KR); KIM, Jin Soon, 18280 Hwaseong-si, Gyeonggi-do (KR); PARK, Jaebeom, 18280 Hwaseong-si, Gyeonggi-do (KR)
(74) Representative: Viering, Jentschura & Partner mbB Patent- und Rechtsanwälte

(57) **Abstract**

An intake manifold and an engine including the same are provided. The intake manifold includes a body shell in which a surge tank is formed and at least one intake pipe formed in the body shell and in fluid communication with the surge tank. A flange is formed at an end portion of the intake pipe and an insert portion extends from a coupling surface of the flange.

## Description

### CROSS-REFERENCE TO RELATED APPLICATION

This application claims priority to and the benefit of Korean Patent Application No. 10-2020-0080780 filed on July 01, 2020, the entire contents of which are incorporated herein by reference.

### BACKGROUND

### (a) Field of the Disclosure

The present disclosure relates to an intake manifold and an engine including the same, more particularly, to an intake manifold and an engine including the same increases volumetric efficiency of intake air by decreasing the temperature of the intake air supplied to a combustion chamber.

### (b) Description of the Related Art

An intake manifold connects a throttle body and cylinders, a surge tank is formed therein, and as many intake pipes are formed as the number of the cylinders in the intake manifold. An intake gas flowing in from the throttle body is distributed to the cylinders through the surge tank and the intake pipes. The intake manifold is mounted in a cylinder head of a cylinder block, and coupled to the cylinder head through a flange formed in the intake manifold. At this time, the flange and the cylinder head are coupled by bolting. The intake gas via through the intake manifold flows into the cylinders through the intake port formed in the cylinder head.

In general, sine the temperature in the engine room, the temperature of the intake gas is increased primarily as it passes through the intake pipe. And since the temperature of the cylinder block is increased due to the combustion process in the cylinder, the temperature of the intake gas passing through the intake port of the cylinder head is also increased. In addition, the intake gas with high temperature passing through the intake port of the intake pipe is further increased during a compression stroke, resulting in a problem that an abnormal combustion (e.g., knocking) occurs in the cylinder.

Meanwhile, the intake manifold and the cylinder head are coupled through the flange formed in the intake manifold. At this time, a stepped portion is generated between the flange of the intake manifold and the intake port of the cylinder head. In other words, a difference in cross-sectional area occurs between an outlet of the intake pipe and an inlet of the intake port. Due to the difference in cross-sectional area between the outlet of the intake pipe and the inlet of the intake port, the flow resistance of the intake gas is increased and the pressure drop of the intake gas is generated, resulting in a decrease of the volumetric efficiency of the intake gas flowing into the cylinders.

The above information disclosed in this section is merely for enhancement of understanding of the background of the disclosure, and therefore it may contain information that does not form the prior art that is already known in this country to a person of ordinary skill in the art.

### SUMMARY

The present disclosure provides an intake manifold and an engine including the same decreases the temperature of an intake air flowing into a combustion chamber. Further, the present disclosure provides an intake manifold and an engine including the same that increases the volumetric efficiency of the intake air by reducing flow resistance of the intake air and preventing the pressure decrease of the intake air when the intake air flows into the combustion chamber of the engine from the intake manifold.

An intake manifold according to an exemplary embodiment of the present disclosure may include a body shell in which a surge tank is formed therein, at least one intake pipe formed in the body shell and in fluid communication with the surge tank, a flange formed at an end portion of the intake pipe, and an insert portion that extends from a coupling surface of the flange. The insert portion may be integrally formed with the intake pipe. An inlet cross-sectional area of the insert portion and an outlet cross-sectional area may be formed as the same. The body shell may be made of synthetic resin material.

An engine according to another exemplary embodiment of the present disclosure may include a cylinder head formed with an intake port through which an intake air flows into the at least one combustion chamber, and an intake manifold inserted and coupled into the intake port. The intake manifold may include a body shell in which a surge tank is formed, at least one intake pipe formed in the body shell and in fluid communication with the surge tank, a flange formed at an end portion of the intake pipe, and an insert portion that extends from a coupling surface of the flange.

The insert portion may be integrally formed with the intake pipe. An inlet cross-sectional area of the insert portion and an outlet cross-sectional area may be formed as the same. The intake manifold may be made of a material having a lower thermal conductivity than the cylinder head. The body shell may be made of synthetic resin material. A gasket may be disposed between a coupling surface of the flange and the cylinder head.

In the intake manifold and the engine including the same according to an exemplary embodiment of the present disclosure, since the insert portion that extends from the intake manifold is inserted into the intake port of the cylinder head and coupled, it may be possible to prevent heat transfer from the cylinder head having high temperature to the intake air passing through the intake port, thereby decreasing the temperature of the intake air flowing into the combustion chamber.

In addition, by preventing a step from occurring between the inlet of the intake port and the outlet of the intake pipe, flow resistance of the intake air passing through the intake port may be minimized, and thus, the volumetric efficiency of the intake air may be improved. Further, since the inlet cross-sectional area of the intake port and the outlet cross-sectional area of the intake pipe are formed as the same, the pressure decrease of the intake air passing through the intake port may be prevented, and the volumetric efficiency of the intake air flowing into the cylinder may be improved.

### BRIEF DESCRIPTION OF THE DRAWINGS

The drawings are intended to be used as references for describing the exemplary embodiments of the present disclosure, and the accompanying drawings should not be construed as limiting the technical spirit of the present disclosure.
FIG. 1 is a cross-sectional view illustrating an engine according to an exemplary embodiment of the present disclosure.
FIG. 2 is a partially cut-away perspective view illustrating an intake manifold according to an exemplary embodiment of the present disclosure.
FIG. 3 is a graph for explaining an effect of an intake manifold according to an exemplary embodiment of the present disclosure.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

The present disclosure will be described more fully hereinafter with reference to the accompanying drawings, in which exemplary embodiments of the disclosure are shown. As those skilled in the art would realize, the described embodiments may be modified in various different ways, all without departing from the spirit or scope of the present disclosure. The drawings and description are to be regarded as illustrative in nature and not restrictive, and like reference numerals designate like elements throughout the specification. Also, the size and thickness of each element are arbitrarily shown in the drawings, but the present disclosure is not necessarily limited thereto, and in the drawings, the thickness of layers, films, panels, regions, etc., are exaggerated for clarity.

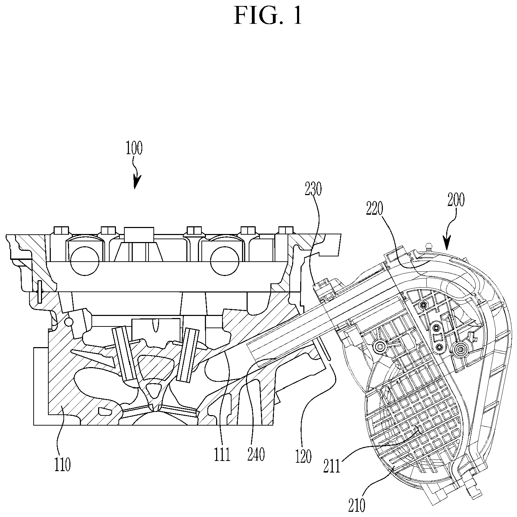

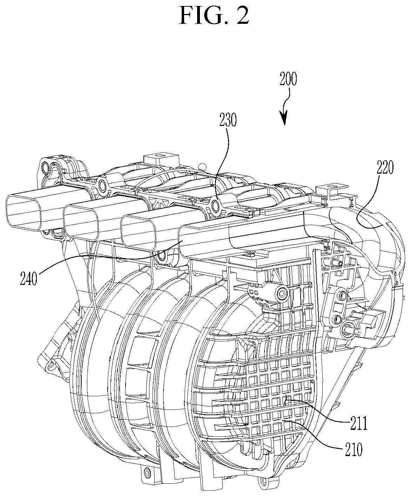

Hereinafter, an intake manifold and an engine including the same according to an exemplary embodiment of the present disclosure is described in detail reference to the drawings. FIG. 1 is a cross-sectional view illustrating an engine according to an exemplary embodiment of the present disclosure. FIG. 2 is a partially cut-away perspective view illustrating an intake manifold according to an exemplary embodiment of the present disclosure.

As shown in FIG. 1 and FIG. 2, an engine according to an exemplary embodiment of the present disclosure may include at least one cylinder in which generates power by burning fuel. The cylinder is formed in a cylinder block, and the cylinder block may include a cylinder body and a cylinder head 110. The cylinder body is formed as a cylindrical shape, a combustion chamber may be formed therein, and an upper portion of the cylinder body may be open. The cylinder head 110 may cover the opened upper portion of the cylinder body and the combustion chamber may be formed between the cylinder body and the cylinder head 110

An intake port 111 through which intake gas flowing into the combustion chamber flows, and an exhaust port through which exhaust gas generated in the combustion chamber is exhausted may be formed in the cylinder head 110. An intake valve selectively opening the combustion chamber may be mounted in the intake port 111, and an exhaust valve selectively opening the combustion chamber may be mounted in the exhaust port.

Hereinafter, the intake manifold according to an exemplary embodiment of the present disclosure will be described in detail with reference to accompanying drawings. Referring to FIG. 2, the intake manifold may include a body shell 210 in which a surge tank 211 is formed therein, and at least one intake pipe 220 formed in the body shell 210. The intake pipe 220 may be in fluid communication with the surge tank 211. The number of the intake pipe 220 may be same to the number of the cylinder.

A flange 230 for coupling with the cylinder head 110 may be formed in an end portion of the intake pipe 220A coupling surface, which is an outer surface of the flange 230, may be in close contact or proximate contact with an inlet of the intake port 111 formed in the cylinder head 110. A plurality of coupling apertures may be formed in the flange 230, and a plurality of engaging apertures corresponding to the coupling apertures may be formed in the cylinder head 110. The coupling apertures formed in the flange 230 and the engaging apertures formed in the cylinder head 110 may be engaged by bolts or other fastening mechanism to couple the cylinder head 110 and the intake manifold 200Additionally this time, a gasket 120 may be installed between the coupling surface and the cylinder head 110 to prevent intake gas from leaking. An insert portion 240 may be formed on the coupling surface of the flange 230, the insert portion 240 may be integrally formed and extended with the intake pipe 220. An outlet cross-sectional area of the insert portion 240 may be the same to an inlet cross-sectional area of the intake pipe 220.

Since the outlet cross-sectional area of the insert portion 240 is same to an inlet cross-sectional area of the intake pipe 220, the flow resistance of the intake gas may be minimized and the pressure decrease of the intake gas may be prevented when the intake gas flowing out of the insert portion 240 of the intake manifold 200 flows into the inlet of the intake pipe 220. A material of the body shell 210 of the intake manifold 200 may be made of a material having a lower thermal conductivity than the cylinder head 110. The cylinder head 110 may be made of a metal material such as aluminum, and the intake manifold 200 may be made of synthetic resin material such as plastic.

Since the insert portion 240 of the intake manifold 200 may be made of synthetic resin material such as plastic, and the insert portion 240 may be inserted into and coupled to the intake port 111 for a predetermined period, it may be minimized that the heat having high temperature generated in the cylinder block is transferred to the intake gas flowing in the intake port 111. Therefore, it may be possible to prevent the temperature of the intake gas flowing into the combustion chamber from increasing.

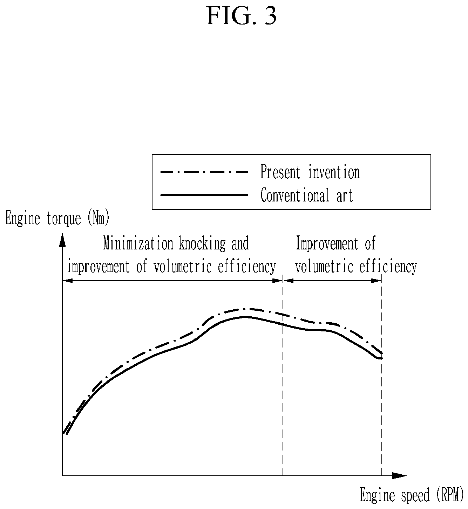

FIG. 3 is a graph for explaining an effect of an intake manifold according to an exemplary embodiment of the present disclosure. As shown in FIG. 3, when the engine is mounted with the intake manifold according to an exemplary embodiment of the present disclosure, since the temperature of the intake gas flowing into the combustion chamber from the intake pipe of the intake manifold through the intake port of the cylinder head may be decreased, it may be possible to minimize knocking and increase the volumetric efficiency of the intake gas. Therefore, the engine torque may be increase comparing to conventional art in a low speed region and a middle speed region of the engine. Further, in a high speed region, the volumetric efficiency may be increased due to the decrement of the temperature of the intake gas flowing in through the intake port, and thus the engine torque may be increased compared to the conventional art.

While this disclosure has been described in connection with what is presently considered to be practical exemplary embodiments, it is to be understood that the disclosure is not limited to the disclosed exemplary embodiments. On the contrary, it is intended to cover various modifications and equivalent arrangements included within the spirit and scope of the appended claims.

### Description of symbols

100: engine
110: cylinder head
111: intake port
120: gasket
200: intake manifold
210: body shell
211: surge tank
220: intake pipe
230: flange
240: insert portion

## Claims

1. An intake manifold, comprising:
a body shell in which a surge tank is formed;
at least one intake pipe formed in the body shell and in fluid communication with the surge tank;
a flange formed at an end portion of the intake pipe; and
an insert portion that extends from a coupling surface of the flange.

2. The intake manifold of claim 1, wherein the insert portion is integrally formed with the intake pipe.

3. The intake manifold of claim 1 or 2, wherein an inlet cross-sectional area of the insert portion is formed equal to an outlet cross-sectional area.

4. The intake manifold of one of claims 1-3, wherein the body shell is made of synthetic resin material.

5. An engine, comprising:
a cylinder head formed with an intake port through which an intake air flows into the at least one combustion chamber; and
an intake manifold inserted and coupled into the intake port;
wherein the intake manifold includes:
a body shell in which a surge tank is formed;
at least one intake pipe formed in the body shell and in fluid communication with the surge tank;
a flange formed at an end portion of the intake pipe; and
an insert portion that extends from a coupling surface of the flange.

6. The engine of claim 5, wherein the insert portion is integrally formed with the intake pipe.

7. The engine of claim 5 or 6, wherein an inlet cross-sectional area of the insert portion is formed equal to an outlet cross-sectional area.

8. The engine of one of claims 5-7, wherein the intake manifold is made of a material with a lower thermal conductivity than the cylinder head.

9. The engine of one of claims 5-8, wherein the body shell is made of synthetic resin material.

10. The engine of one of claims 5-9, wherein a gasket is disposed between a coupling surface of the flange and the cylinder head.
